# EUROPEAN PATENT APPLICATION

(11) **EP 2 026 548 A1**
(43) Date of publication of application: **18.02.2009**
(21) Application number: 07817315.0
(22) Date of filing: 26.11.2007
(51) Int. Cl.: H04M 3/00

(54) **A METHOD, SYSTEM AND DEVICE FOR IMPLEMENTING CONTROLLED CHARGING**

(30) Priority: 01.12.2006 CN 200610157243
(71) Applicant: Huawei Technologies Co., Ltd., Longgang District, Shenzhen Guangdong 518129 (CN)
(72) Inventor: LIU, Zheng, Shenzhen Guangdong 518129 (CN)
(74) Representative: Gulde Hengelhaupt Ziebig & Schneider
(86) International application number: PCT/CN2007/071125
(87) International publication number: WO 2008/064606

(57) **Abstract**

A method for implementing controlled charging includes: a message routing apparatus receives a service message sent by a first telecom service open gateway when the first telecom service open gateway determines that the service charged party is not in the service area of the first charging system which is the home charging system of the first telecom service open gateway; the message routing apparatus sends the service message to a second telecom service open gateway which is the home telecom service open gateway of the service charged party, where the service message instructs the second telecom service open gateway which is the home telecom service open gateway of the service charged party to send a charging request to a second charging system which is the home charging system of the second telecom service open gateway. The present invention also discloses a system, a message routing apparatus and a telecom service open gateway for implementing controlled charging. With the present invention, telecom service open gateways are deployed in different areas of the network and interconnected via a message routing apparatus so as to enable inter-area charging while the simplicity of networking and the efficiency of routing are also assured.

## Description

### Field of the Invention

The present invention relates to a charging method for communication, and in particular, to a method, system and apparatus for implementing controlled charging.

### Background of the Invention

In the third generation (3G) network and the next generation network (NGN), value added services (VASs) are regarded as a key source of market growth. However, the development of traditional telecom services requires knowledge of many telecom protocols. The entry threshold is therefore high. The telecom and information technology (IT) sectors have been exploring solutions to allowing IT application developers to develop telecom VASs. Under this background, many organizations specialized in researching telecom openness put forward the concept of open interfaces based on the open requirement of network capabilities and the adoption of distributed IT. It is using the interface definition method in software programming to abstract the lower layer network protocols, so that service developers can compile programs based on interfaces instead of protocols and the lower layer network capabilities can be open for third parties. Some open interfaces well known are Parlay/Parlay X and JAIN API. A product that opens telecom services to third-party service providers (SPs) based on these open interfaces is generally known as a telecom service open gateway.

Telecom service open specifications define a series of open interfaces for use of third parties. For example, Parlay X 2.0 defines 13 capabilities, namely, third party call, call notification, short messaging, multimedia messaging, payment, account management, terminal status, terminal location, call handling, audio call, multimedia conference, address list management, and presence. These capabilities fall into two categories. One is telecom service capabilities, such as short messaging and third party call. The other is management capabilities, such as payment, account management and address list management. In this way, the telecom service open gateway provides both telecom service open interfaces and management interfaces, based on which third-party service developers can define services.

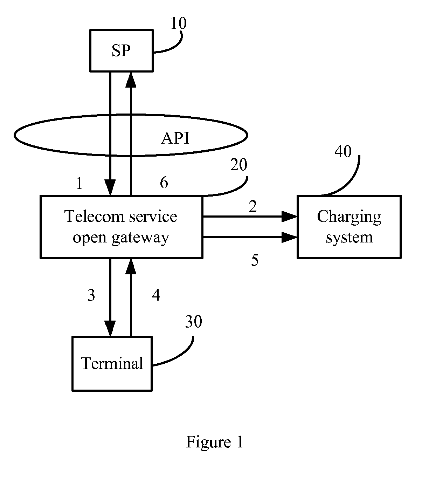

Service charging based on the telecom service open gateway is implemented in a way that the SP calls an interface provided by the telecom service open gateway. For example, a short messaging service entity calls a charging access function to charge the service subscriber. As shown in Figure 1, the downlink messaging flow in the service charging is as follows:

Step 1: The SP 10 calls/invokes an open interface (defined via API) of the telecom service open gateway 20 to send a service request;

Step 2: The telecom service open gateway 20 calls the charging system 40 to rate the service subscriber;

Step 3: The telecom service open gateway 20 calls the related service engine to deliver the request to the terminal 30.

The uplink messaging flow in the service charging includes:

Step 4: The terminal 30 initiates a request, which is reported to the telecom service open gateway 20 via the service engine (such as a short message service center or a multimedia message service center);

Step 5: The telecom service open gateway 20 calls the charging system 40 to rate the service subscriber;

Step 6: The telecom service open gateway 20 calls the call-back interface of the SP 10 to send the request to the SP 10.

The inventor, however, finds in the process of implementing the present invention that the prior telecom service open gateway only defines open application programming interfaces (APIs) but lacks the definition of multi-node networking. In this case, the following problem may occur: when the SP and the service charged party are in different great areas and the SP sends a request to the home telecom service open gateway of the SP, because the telecom service open gateway is not the home gateway of the service charged party, the telecom service open gateway cannot call the home charging system of the service charged party which is in another great area to do rating; in addition, because the home charging system of the telecom service open gateway has no information of the service charged party that is not under its control, the telecom service open gateway cannot call its home charging system to rate the service charged party. As a result, the rating fails and the service request cannot get to the service user so that the service also fails. Therefore, this single-node telecom service open gateway will not be able to meet the needs of service growth in the future.

### Summary of the Invention

Embodiments of the invention provide a method, system and apparatus for implementing controlled charging, so as to overcome the inability of the prior art to provide charging capability for services between a service provider and a service charged party that are in different great areas.

The technical solution of the present invention is as follows:

A method for implementing controlled charging includes:

receiving, by a message routing apparatus, a service message sent by a first telecom service open gateway when the first telecom service open gateway determines that a service charged party is not in a service area of a first charging system which is the home charging system of the first telecom service open gateway; and

sending, by the message routing apparatus, the service message to a second telecom service open gateway which is the home telecom service open gateway of the service charged party, where the service message instructs the second telecom service open gateway to send a charging request to a second charging system which is the home charging system of the service charged party.

Accordingly, a system for implementing controlled charging includes:

a first telecom service open gateway, adapted to receive a message service, and send the service message to a home message routing apparatus of the first telecom service open gateway when determining that the service charged party is not in a service area of a first charging system which is the home charging system of the first telecom service open gateway;

a message routing apparatus, adapted to send the service message to a second telecom service open gateway which is the home telecom service open gateway of the service charged party;

a second telecom service open gateway, adapted to send a charging request to a second charging system which is the home charging system of the second telecom service open gateway; and

a second charging system, adapted to receive the charging request from the second telecom service open gateway which is the home telecom service open gateway of the service charged party and process rating and charging.

Accordingly, a message routing apparatus includes:

a message receiving unit, adapted to receive a service message sent by a telecom service open gateway;

a message decoding unit, adapted to decode the service message received by the message receiving unit to obtain a service charged party identifier;

a routing table querying unit, adapted to query for and obtain a routing address of a home telecom service open gateway of the service charged party according to the service charged party identifier sent by the message decoding unit; and

a message sending unit, adapted to send the service message to the home telecom service open gateway of the service charged party according to the routing address obtained by the routing table querying unit.

Accordingly, a telecom service open gateway includes:

means for receiving a service message;

means for determining whether a service charged party is in a service area of a home charging system of the telecom service open gateway; and

means for sending the service message to a home message routing apparatus of the telecom service open gateway when it is determined that the service charged party is not in the service area of the home charging system of the telecom service open gateway.

From the foregoing technical solution, it can be seen that embodiments of the invention provide the following benefits:

Telecom service open gateways are deployed in different areas of the network and interconnected via a message routing apparatus so as to enable inter-area charging while the simplicity of networking and the efficiency of routing are also assured.

### Brief Description of the Drawings

Figure 1 shows the technical solution for a telecom service open gateway to perform service charging in prior art;

Figure 2 shows the structure of a system for controlled charging according to an embodiment of the invention;

Figure 3 shows the flowchart of a method for controlled charging according to an embodiment of the invention;

Figure 4 shows the downlink flow of the method for controlled charging shown in Figure 3 for the short message service;

Figure 5 shows the uplink flow of the method for controlled charging shown in Figure 3 for the short message service; and

Figure 6 shows the structure of a message routing apparatus according to an embodiment of the invention.

### Detailed Description of the Invention

To better explain the technical issue resolved by and the technical solution of the invention, the following describes embodiments of the invention in detail with reference to the accompanying drawings.

Take the inter-area charging between two great areas for example. Here, a great area is a logical concept of an entire network which is planned by the operator based on service needs. According to the service needs, the operator may plan 1∼n great areas in the network and one great area may include one or more provinces. In one great area, there may be 1∼n telecom service open systems but only one charging system. The n telecom service open systems all connect with the charging system in the great area. The SP accesses the network via an open gateway it registers with. For description purposes, in an embodiment of the invention, there are great area 1 and great area 2 and one telecom service open gateway is deployed in each great area. The embodiments in the case of multiple great areas and the case that multiple telecom service open gateways are deployed in each great area are similar to this embodiment.

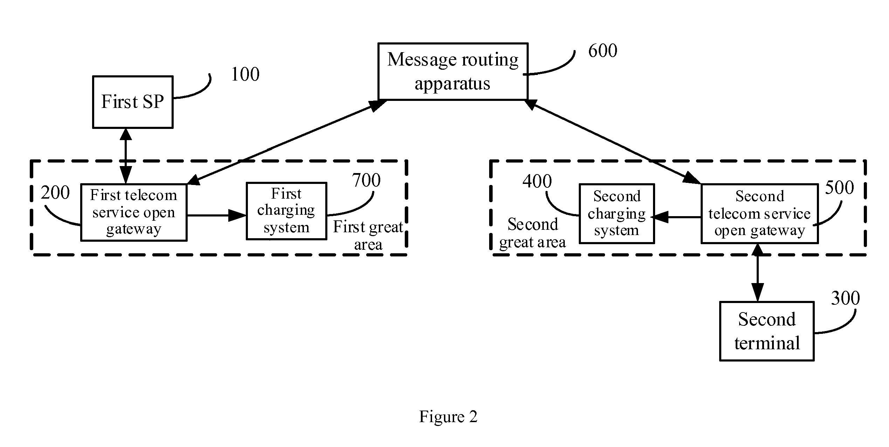

As shown in Figure 2, a system for controlled charging according to an embodiment of the invention includes: a first SP 100, a first telecom service open gateway 200, a first charging system 700, a message routing apparatus 600, a second telecom service open gateway 500, a second charging system 400, and a second terminal 300.

The first SP 100 is an application server providing various services for service users. The first SP 100 is adapted to send service messages (such as short messages, multimedia messages and third party calls) to service users via the first telecom service open gateway 200 and receive status report messages from the service users; or receive service subscription messages from service subscribers reported by the first telecom service open gateway 200 of the SP 100 and send status report messages to the first telecom service open gateway 200.

The first telecom service open gateway 200 is adapted to receive a service message sent by the first SP 100 and judge whether the service charged party is in the service area of the home charging system of the first telecom service open gateway 200. If the service charged party is not in the service area of the home charging system of the first telecom service open gateway 200, the first telecom service open gateway 200 sends the service message to the message routing apparatus 600. Otherwise, the first telecom service open gateway 200 proceeds with the step 2 shown in Figure 1 to send a charging request to the home charging system directly. When the service subscriber (for example, the second terminal 300) sends a service message (usually a service subscription request) to the first SP 100 while the service charged party is not the service subscriber but the first SP 100, the first telecom service open gateway 200 is further adapted to receive the service message sent by the service subscriber (the second terminal 300) from the message routing apparatus 600 and send a charging request to the first charging system 700 which is the home charging system of the first telecom service open gateway 200. The first telecom service open gateway 200 also reports the service message to the first SP 100 which confirms the provisioning of the service.

The message routing apparatus 600 is adapted to forward a service message received from the first telecom service open gateway 200 that is sent by the first SP 100 to the second telecom service open gateway 500 which is the home telecom service open gateway of the service charged party (for example, the second terminal 300 when the service charged party is the service subscriber); or forward a service message received from the second telecom service open gateway 500 that is sent by the service subscriber (for example, the second terminal 300, when the service subscriber sends a service subscription message to the first SP 100) to the first telecom service open gateway 200 where the service charged party (the service charged party is not the service subscriber but the first SP 100), the first SP 100, is located.

The second telecom service open gateway 500 is adapted to send a charging request to the second charging system 400 which is the home charging system of the second telecom service open gateway 500 and forward the received service message that is sent by the first SP 100 to the service user (the second terminal 300) which confirms the reception of the service message. when receiving a service message (such as a service subscription request) from the service subscriber, the second telecom service open gateway 500 is further adapted to judge whether the service charged party is in the service area of the home charging system of the second telecom service open gateway 500 and if not, send the service message to the message routing apparatus 600. Otherwise, proceed with step 5 shown in Figure 1 to directly send a charging request to its home charging system, the second charging system 400.

The first charging system 700 is adapted to receive a charging request from the first telecom service open gateway 200 which is the home telecom service open gateway of the service charged party and process rating and charging.

The second charging system 400 is adapted to receive a charging request from the second telecom service open gateway 500 which is the home telecom service open gateway of the service charged party and process rating and charging.

The second terminal 300 (which may be the service subscriber, the service user or the service charged party) is adapted to request subscription to a service with the first SP 100 and receive a status report message from the first SP 100; or receive a service message which is sent by the first SP 100 and delivered by the second telecom service open gateway 500 in the home location of the second terminal 300 and send a status report message to the second telecom service open gateway 500.

Another embodiment of the invention provides a telecom service open gateway, including means for receiving a service message, means for determining whether the service charged party is in the service area of the home charging system of the telecom service open gateway, and means for sending the service message to the home message routing apparatus of the telecom service open gateway when it is determined that the service charged party is not in the service area of the home charging system of the telecom service open gateway.

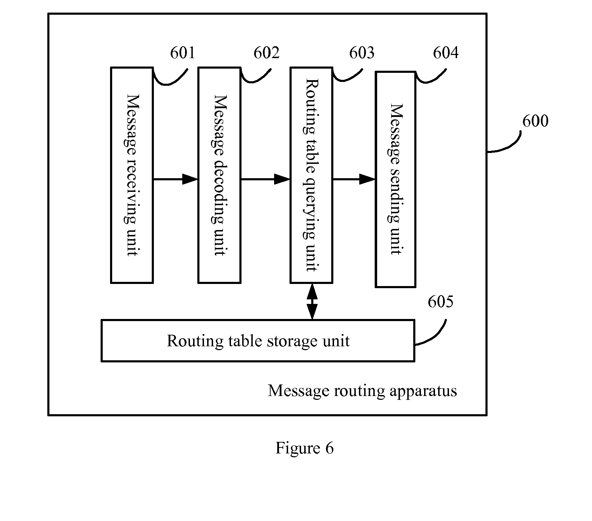

Figure 6 shows the structure of a message routing apparatus according to an embodiment of the invention. The message routing apparatus 600 includes a message receiving unit 601, a message decoding unit 602, a routing table querying unit 603, and a message sending unit 604.

The message receiving unit 601 is adapted to receive a service message sent by the telecom service open gateway and send the service message to the message decoding unit 602.

The message decoding unit 602 is adapted to decode the service message to obtain the identifier of the service charged party and send the service charged party identifier to the routing table querying unit 603.

The routing table querying unit 603 is adapted to get the routing address of the home telecom service open gateway of the service charged party by querying a routing table storage unit 605 embedded in the message routing apparatus or another apparatus independent of the message routing apparatus (which may be a message routing center on the network side that connects with all message routing apparatuses) according to the service charged party identifier, and instruct the message sending unit 604 to send the service message to the home telecom service open gateway of the service charged party.

The message sending unit 604 is adapted to send the service message to the home telecom service open gateway of the service charged party according to the routing address obtained by the routing table querying unit 603.

Further, the message routing apparatus 600 may include a routing table storage unit 605, adapted to store routing addresses of home telecom service open gateways of service charged parties that are associated with service charged parties. The routing table querying unit 603 in the message routing apparatus 600 queries the routing table storage unit 605 directly for a routing address.
In practice, a routing table may be set as Table 1:

**Table 1**

| Service charged party Identifier (Number) | URL of Telecom Service Open Gateway |
|---|---|
| 135******** | Address 1 |
| 136******** | Address 2 |
| ...... | ...... |

In an embodiment of the invention, to guarantee the correctness of information in the routing table, the message routing center on the network side may update data in the message routing apparatus in proper time.

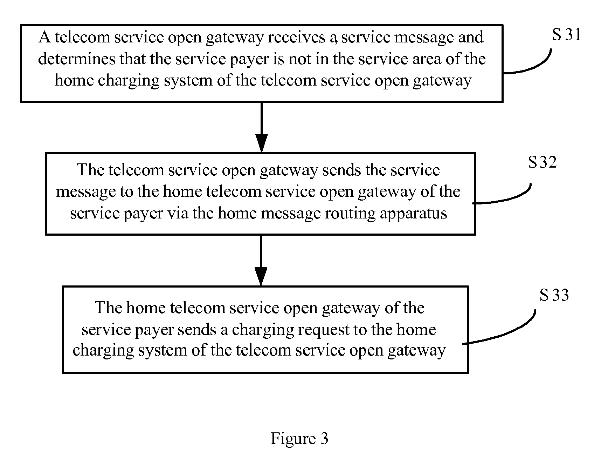

As shown in Figure 3, a method for implementing controlled charging based on the foregoing system according to an embodiment of the invention includes the following steps:

S31: A telecom service open gateway receives a service message and determines that the service charged party is not in the service area of the home charging system of the telecom service open gateway.

The telecom service open gateway may determine whether the home location of the service charged party is within the service area of the home charging system of the telecom service open gateway according to the service charging information carried in the service message.

Suppose the SP sends a service message to the service user. There are two methods to determine whether the home location of the service charged party is within the service area of the home charging system of the telecom service open gateway.

For example, the service charging information carried in the service message sent by the SP to the service user is described in Table 2:

**Table 2**

| FA of Designated Service charged party | Any of (1)-(4) |
|---|---|
| SPID (1) | Identifier of service provider |
| OA (2) | Identifier of service subscriber |
| DA (3) | Identifier of service user |
| Other (4) | Service charged party not designated |

Method 1: The telecom service open gateway obtains the service charged party identifier according to the service charging information. If the FA of designated service charged party in Table 2 is OA (2), it can be known that the service provider has designated the service subscriber OA (2) as the service charged party. The telecom service open gateway obtains the service charged party identifier (such as the number of the service charged party) according to the designation and then queries the number segment stored in the telecom service open gateway or stored in another apparatus to determine whether the service charged party identifier is local (based on a great area). If the service charged party identifier is a local number, the telecom service open gateway determines that the service charged party is in the service area of the home charging system of the telecom service open gateway; or else, the telecom service open gateway determines that the service charged party is not in the service area of the home charging system of the telecom service open gateway.

Method 2: The telecom service open gateway determines the service charged party according to the service charging information. If the FA of designated service charged party is DA (3) in Table 2, the service provider has designated the service user DA (3) as the service charged party. Then the telecom service open gateway queries its home charging system about whether charging information of the service charged party exists in the charging system. If the charging information of the service charged party exists, the telecom service open gateway determines that the service charged party is in the service area of the home charging system of the telecom service open gateway; or else, the telecom service open gateway determines that the service charged party is not in the service area of the home charging system of the telecom service open gateway. It should be understood that when the SP does not designate a payer for the service, that is, when the designated service charged party FA is (4) in Table 2, the telecom service open gateway may determine a service charged party according to the default policy of the SP or the telecom service open gateway may determine the service charged party according to a service agreement between the telecom service open gateway and the SP.

When the service subscriber sends a service message (service subscription message) to the first SP, the telecom service open gateway queries the first SP about the payer of the service according to the information carried in the message, such as the message source address, destination address (identifier such as the access number of the first SP) and the service feature information. The telecom service open gateway also queries the embedded number segment table in either of the foregoing two methods according to the received identifier of the service charged party so as to determine whether the service charged party is in the service area of the home charging system of the telecom service open gateway. If information of the service charged partys exists in the charging system, the telecom service open gateway may also query the home charging system about whether charging information of the service charged party exists so as to determine whether the service charged party is in the service area of the home charging system of the telecom service open gateway.

S32: The telecom service open gateway sends the service message to the home telecom service open gateway of the service charged party via a home message routing apparatus.

The message routing apparatus resolves the service charging information carried in the service message it receives to obtain the service charged party identifier in a procedure similar to how the telecom service open gateway obtains the service charged party identifier previously described. Then the message routing apparatus queries an embedded routing table or an external routing table storage apparatus (like the message routing center on the network side) to obtain the routing address of the home telecom service open gateway of the service charged party and sends the service message to the home telecom service open gateway of the service charged party according to the obtained routing address.

S33: The home telecom service open gateway of the service charged party sends a charging request to the home charging system of the telecom service open gateway.

Upon reception of the service message, the home telecom service open gateway of the service charged party sends a charging request to the home charging system, which then processes rating for the service request.

In addition, according to another embodiment of the invention, to assure the accuracy and reliability of charging, the method may further include:

S34: The home telecom service open gateway of the service charged party sends the service message to the service user or the SP and sends a charging confirmation request to the home charging system of the service charged party upon reception of a status report message from the service user or the SP.

To help those skilled in the art better understand the embodiments of the present invention, the following describes the method for implementing controlled charging according to an embodiment of the invention with reference to an accompanying drawing. In this embodiment of the invention, a first SP sends a short message to a second terminal (which is the service subscriber, the service user and the service charged party).

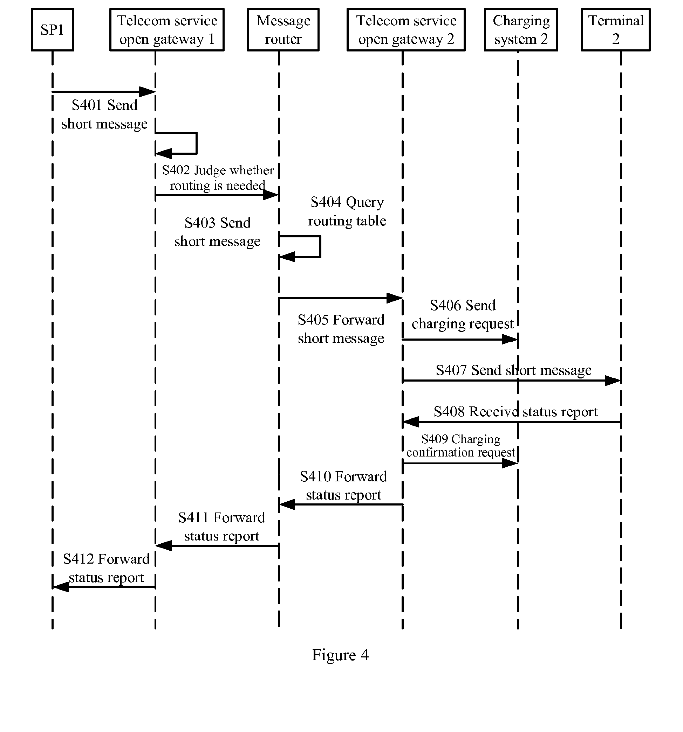

As shown in Figure 4, the uplink flow of the service message includes the following steps:

S401: The first SP sends a short message to a first telecom service open gateway in the access location of the first SP.

S402: The first telecom service open gateway judges whether the short message needs to be routed by determining whether the home location of a service charged party (the second terminal) and the home location of the first SP belong to one great area. If the home locations of the service charged party and the first SP belong to one great area, routing is not needed and the first telecom service open gateway sends a charging request to a home charging system that is located in the same great area.

S403: If routing is needed, and the first telecom service open gateway forwards the short message to a message routing apparatus/message router.

Specifically, if the home locations of the service charged party (the second terminal) and the first SP are not in one great area, the first telecom service open gateway sends the messages to the home message routing apparatus.

S404: The message routing apparatus queries a routing table according to the service charged party identifier to get the destination address of routing.

Specifically, the message routing apparatus resolves the service charging information carried in the short message to obtain the service charged party identifier (such as the number of the second terminal) and queries the routing table according to the service charged party identifier to get the routing address of a home second telecom service open gateway of the service charged party.

S405: The message routing apparatus forwards the message to the second telecom service open gateway.

Specifically, the message routing apparatus may forward the short message to the second telecom service open gateway according to the obtained routing address of the home second telecom service open gateway of the service charged party.

S406: The home second telecom service open gateway sends a charging request to a second charging system.

S407: The home second telecom service open gateway delivers the short message to a service user (a second terminal) via a short message service center.

S408: The second terminal reports a short message reception status report message to the home second telecom service open gateway.

S409: The home second telecom service open gateway sends a charging confirmation request to the second charging system. The rating procedure ends.

S410-S412: If the first SP requires a status report of the current service reception, the status report is forwarded to the first SP.

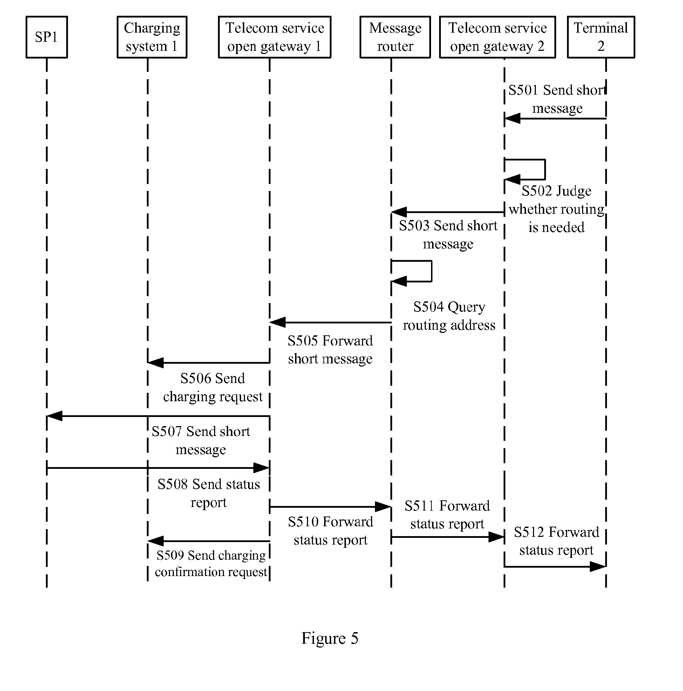

Accordingly, the uplink flow where the second terminal (in this embodiment, both the service subscriber and the service user) sends a short message as a service request to the first SP (in this embodiment, the service charged party) includes the following steps (as shown in Figure 5):

S501: The second terminal (the service subscriber) sends a short message to a second telecom service open gateway, requesting subscription to the short message service (such as weather forecast short message service) of the first SP.

S502: The second telecom service open gateway judges whether routing is needed.

Specifically, the second telecom service open gateway queries the first SP about the payer of the service according to the source address, destination address (identifier of the fist SP) and service features of the short message. The second telecom service open gateway also queries an embedded number segment table or the home charging system about whether charging information of the service charged party exists in the method previously described herein according to the received service charged party identifier service charged partyso as to determine whether home locations of the service charged party and the service subscriber belong to one great area. If the home locations of the service charged party and the service subscriber belong to one great area, routing is not needed and the second telecom service open gateway processes charging according to the charging processing procedure in the prior art.

S503: If routing is needed, the second telecom service open gateway forwards the short message to a message routing apparatus/message router.

Specifically, if the home locations of the SP and the service subscriber belong to one great area, the second telecom service open gateway sends the short message to its home message routing apparatus, the short message carrying the obtained service charged party identifier.

S504: The message routing apparatus queries for the destination address of routing according to the service charged party identifier information.

Specifically, the message routing apparatus resolves the short message service charged party identifier information (such as the SP ID of the short message SP) to get the service charged party identifier and queries the routing table to obtain the routing address of the home first telecom service open gateway of the service charged party.

S505: The message routing apparatus forwards the short message to the first telecom service open gateway.

S506: The first telecom service open gateway sends a charging request to the first charging system.

S507: The first telecom service open gateway reports the short message to the first SP.

S508: The first SP sends a short message reception status report message to the first telecom service open gateway.

S509: The first telecom service open gateway sends a charging confirmation request to the first charging system. Now the rating procedure ends.

S510-S512: If the service subscriber (the second terminal) requires a status report of the current service, the status report is forwarded to the service subscriber (the second terminal).

In practice, the inter-area charging procedures of other services (such as multimedia messaging and third party call) operating on the telecom service open gateway are similar to the foregoing short message procedure.

It is apparent that those skilled in the art can make various modifications and variations to the invention without departing from scope of the invention. The invention is intended to cover the modifications and variations provided that they fall in the scope of protection defined by the claims or their equivalents.

## Claims

1. A method for controlling charging, **characterized by** comprising:
receiving, by a message routing apparatus, a service message sent by a first telecom service open gateway when the first telecom service open gateway determines that a service charged party is not in a service area of a first charging system which is the home charging system of the first telecom service open gateway; and
sending, by the message routing apparatus, the service message to a second telecom service open gateway which is the home telecom service open gateway of the service charged party, where the service message instructs the second telecom service open gateway which is the home telecom service open gateway of the service charged party to send a charging request to a second charging system which is the home charging system of the second telecom service open gateway.

2. The method of claim 1, wherein
the first telecom service open gateway determines that the service charged party is not in the service area of the first charging system which is the home charging system homes of the first telecom service open gateway comprises:
receiving the service message, obtaining the service charged party identifier according to service charging information carried in the service message, and determining that the service charged party is not in the service area of the first charging system which is the home charging system of the first telecom service open gateway according to the service charged party identifier, by the first telecom service open gateway.

3. The method of claim 1, wherein
the first charging system determines that the service charged party is not in the service area of the first charging system which is the home charging system of the first telecom service open gateway comprises:
receiving the service message, obtaining the service charged party according to service charging information carried in the service message, and determining that the service charged party is not in the service area of the first charging system which is the home charging system of the first telecom service open gateway by querying the first charging system about whether information of the service charged party exists, by the first telecom service open gateway.

4. The method of claim 1, wherein the service message carries service charging information; and
the sending the service message to the second telecom service open gateway which is the home telecom service open gateway of the service charged party comprises:
obtaining a service charged party identifier according to service charging information carried in the service message and determining a routing address of the second telecom service open gateway which is the home telecom service open gateway of the service charged party according to the service charged party identifier; and
forwarding the service message to the second telecom service open gateway which is the home telecom service open gateway of the service charged party according to the obtained routing address, by the message routing apparatus.

5. The method of claim 4, wherein the determining a routing address of the second telecom service open gateway which is the home telecom service open gateway of the service charged party according to the service charged party identifier comprises:
querying, by the message routing apparatus, an embedded routing table according to the service charged party identifier to determine the routing address of the second telecom service open gateway which is the home telecom service open gateway of the service charged party.

6. The method of any of claims 1-3, further comprising:
sending, by the second telecom service open gateway which is the home telecom service open gateway of the service charged party, a charging request to the second charging system which is the home charging system of the telecom service open gateway; and
sending, by the second telecom service open gateway which is the home telecom service open gateway of the service charged party, a charging confirmation request to the second charging system that serves the second telecom service open gateway which is the home telecom service open gateway of the service charged party.

7. A system for controlling charging, implementing controlled charging, **characterized by** a first telecom service open gateway, adapted to receive a message service, and send the service message to a message routing apparatus, which is the home message routing apparatus of the first telecom service open gateway, when determining that a service charged party is not in a service area of a first charging system which is the home charging system of the first telecom service open gateway;
the message routing apparatus, adapted to send the service message to a second telecom service open gateway which is the home telecom service open gateway of the service charged party;
a second telecom service open gateway, adapted to send a charging request to a second charging system which is the home charging system of the second telecom service open gateway; and
the second charging system, adapted to receive the charging request from the second telecom service open gateway which is the home telecom service open gateway of the service charged party and process rating and charging.

8. The system of claim 7, wherein the message routing apparatus comprises:
a message receiving unit, adapted to receive the service message sent by the first telecom service open gateway;
a message decoding unit, adapted to decode the service message received by the message receiving unit to obtain a service charged party identifier;
a routing table querying unit, adapted to query for and obtain a routing address of a home telecom service open gateway of the service charged party according to the service charged party identifier sent by the message decoding unit; and
a message sending unit, adapted to send the service message to the home telecom service open gateway of the service charged party according to the routing address obtained by the routing table querying unit.

9. The system of claim 8, wherein the message routing apparatus further comprises a routing table storage unit, adapted to store routing addresses of home telecom service open gateways of service charged parties that are associated with service charged parties.

10. A message routing apparatus, **characterized by** a message receiving unit, adapted to receive a service message sent by a telecom service open gateway;
a message decoding unit, adapted to decode the service message to obtain a service charged party identifier;
a routing table querying unit, adapted to query for and obtain a routing address of a home telecom service open gateway of the service charged party according to the service charged party identifier; and
a message sending unit, adapted to send the service message to the home telecom service open gateway of the service charged party according to the routing address obtained by the routing table querying unit.

11. The message routing apparatus of claim 10, further comprising:
a routing table storage unit, adapted to store routing addresses of home telecom service open gateways of service charged parties that are associated with service charged parties.

12. The message routing apparatus of claim 10 or 11, wherein the message receiving unit exchanges data with a telecom service open gateway via a Webservice or Corba open interface.

13. A telecom service open gateway way, **characterized by**
means for receiving a service message;
means for determining whether a service charged party is in a service area of a home charging system of the telecom service open gateway; and
means for sending the service message to a home message routing apparatus of the telecom service open gateway when it is determined that the service charged party is not in the service area of the home charging system of the telecom service open gateway.
